# EUROPÄISCHE PATENTSCHRIFT

(11) **EP 1 172 915 B1**
(45) Veröffentlichungstag und Bekanntmachung des Hinweises auf die Patenterteilung: **15.08.2018**
(21) Anmeldenummer: 01114278.3
(22) Anmeldetag: 13.06.2001
(51) Int. Cl.: H02J 7/00

(54) **Elektronische Einheit und Verfahren zur Erkennung einer Verpolung der Bordnetzspannung in Kraftfahrzeugen**
Electronic device and method for sensing the reverse polarity of a vehicle power network voltage
Dispositif et procédé de reconnaissance d'une inversion du polarité de la tension de bord d'un vehicule

(30) Priorität: 15.07.2000 DE 10034442
(43) Veröffentlichungstag der Anmeldung: 16.01.2002
(73) Patentinhaber: Bayerische Motoren Werke Aktiengesellschaft, 80809 München (DE)
(72) Erfinder: Wagner, Armin, 85757 Karlsfeld (DE); Seidel, Christina, 81677 München (DE); Luthe, Christoph, 80809 München (DE); Stahl, Hans-Ulrich, Dr., 80809 München (DE)

(56) Entgegenhaltungen:
- DE-A1- 4 231 970
- US-A- 5 371 455
- US-A- 5 939 863

## Beschreibung

Die Erfindung bezieht sich auf eine elektronische Einheit in Kraftfahrzeugen nach dem Oberbegriff der Patentansprüche 1 bis 3.

Derartige Einheiten sind in Kraftfahrzeugen, insbesondere als Steuergeräte für verschiedene Kraftfahrzeugfunktionen, vielfach bekannt.

Im Falle einer Verpolung der Bordnetzspannung, z. B. durch unabsichtliches Vertauschen der Batteriepolanschlüsse bei einem Fremdstart, können sehr hohe elektrische Ströme fliessen. Je länger diese Ströme fliessen, umso größere Schäden können an Steuergeräten und/oder an anderen elektrischen und elektronischen Bauteilen im Kraftfahrzeug auftreten. Bisher sind keine Maßnahmen bekannt, um eine Verpolung und insbesondere das Ausmaß einer möglichen Schädigung durch eine Verpolung in der Werkstatt überprüfen zu können.

Aus der DE 42 31 970 A1 ist ein Batterieladegerät bekannt. Vorgeschlagen wird, die Ladeleitung zwischen einer Ladeschaltung und einem angeschlossenen Akkumulator oder einer Batterie körperlich aufzutrennen, d.h. auch bei eingeschaltetem Gerät und angeschlossener. Batterie so lange offen zu halten, bis eine Überprüfung der Batterie ergibt, dass diese ordnungsgemäß gepolt angeschlossen ist. Erst dann soll die Batterie zur Ladung angeschaltet werden, wobei der hier als Verpolschutz-Logikschaltung vorgesehene Mikroprozessor auch noch weitere Aufgaben gleichzeitig wahrnehmen soll.

Aus der DE 196 09 219 A1 ist eine elektronische Schaltungsanordnung mit Verpolschutz bekannt. Vorgeschlagen wird, dass für den Verpolschutz ein MOS-Feldeffekttransistor vorgesehen wird, dessen Drain-Anschluss mit dem positiven Eingangsanschluss der Schaltungsanordnung, dessen Source-Anschluss mit dem positiven Ausgangsanschluss der Schaltungsanordnung und dessen Gate-Anschluss mit dem Masseanschluss verbunden ist.

Die EP 0 973 239 A2 beschreibt eine Schutzschalteinrichtung für einen Laststromkreis mit mindestens zwei zwischen einem Betriebsspannungseingang und einem Schaltausgang für die Last verlaufenden Strompfaden. In jedem Strompfad ist ein elektronischer Schalter vorgesehen, der mit einem Steuersystem zum Überwachen und allpoligen Abschalten des Laststromkreises verbunden ist.

Es ist Aufgabe der Erfindung, ein Verfahren und eine Vorrichtung zum Nachweis einer Verpolung der Bordnetzspannung zu schaffen.

Diese Aufgabe wird durch die Merkmale der Patentansprüche 1 bis 3 bzw. 6 vorrichtungsmäßig bzw. verfahrensmäßig gelöst. Vorteilhafte Weiterbildungen der Erfindung sind die Gegenstände der abhängigen Patentansprüche.

Elektronische Einheiten in Kraftfahrzeugen, insbesondere in Form von Steuergeräten für Kraftfahrzeugfunktionen, weisen üblicherweise einen Anschluß für die negative Bordnetzspannung bzw. für eine Verbindung zur Fahrzeugmasse oder zum negativen Batteriepol und einen Anschluß für die positive Bordnetzspannung bzw. für eine Verbindung zum positiven Batteriepol einer Kraftfahrzeugbatterie auf. Eine Verpolung der Bordnetzspannung findet beispielsweise statt, wenn bei einem Fremdstartversuch die Batteriepolanschlüsse vertauscht werden. Am Anschluß für die negative Bordnetzspannung liegt dann tatsächlich die positive Bordnetzspannung an und umgekehrt.

Durch den erfindungsgemäßen Funktionsblock wird daher die tatsächliche Spannung am Anschluß für die negative Bordnetzspannung mit der tatsächlichen Spannung am Anschluß für die positive Bordnetzspannung verglichen. Verpolung wird erkannt und die Verpolungserkennung wird abgespeichert, wenn die tatsächliche Spannung am Anschluß für die negative Bordnetzspannung größer als die tatsächliche Spannung am Anschluß für die positive Bordnetzspannung ist.

In einer ersten Alternative wird im Funktionsblock die tatsächliche Spannung am Anschluß für die negative Bordnetzspannung mit einem vorgegebenen oberen Grenzwert verglichen. Die tatsächliche Spannung am Anschluß für die negative Bordnetzspannung wird beispielsweise gegenüber einer von der negativen Bordnetzspannung entkoppelten Masse gemessen. Verpolung wird erkannt und die Verpolungserkennung wird abgespeichert, wenn die tatsächliche Spannung am Anschluß für die negative Bordnetzspannung größer als der obere Grenzwert ist.

In einer zweiten Alternative wird im Funktionsblock die tatsächliche Spannung am Anschluß für die positive Bordnetzspannung mit einem vorgegebenen unteren Grenzwert verglichen. Die tatsächliche Spannung am Anschluß für die positive Bordnetzspannung wird beispielsweise ebenfalls gegenüber einer von der negativen Bordnetzspannung entkoppelten Masse gemessen. Verpolung wird erkannt und die Verpolungserkennung wird abgespeichert, wenn die tatsächliche Spannung am Anschluß für die positive Bordnetzspannung kleiner als der untere Grenzwert ist.

Die drei Möglichkeiten können auch in sinnvoller Weise miteinander kombiniert werden. Die Verpolungserkennung wird entweder in der elektronischen Einheit selbst, z. B. in einem Fehlerspeicher abgelegt, oder beispielsweise als Businformation an eine andere Einheit zum zentralen Abspeichern ausgegeben.

Besonders wichtig bei allen drei Möglichkeiten ist, daß die Einheit eine interne elektrische Versorgungseinheit aufweist, die unabhängig von der Polung der Bordnetzspannung bzw. völlig unabhängig von der Bordnetzspannung zum Einsatz kommen kann. Eine derartige Versorgungseinheit kann beispielsweise eine Zusatzbatterie, ein Akku, ein Power Cap oder ein anderer Kondensator oder auch eine Schaltung, die eine elektrische Versorgung unabhängig von der Polung der Bordnetzspannung zur Verfügung stellen kann, sein. Denn diese Versorgungseinheit muß die elektronische Einheit bei Auftreten der Verpolung mit elektrischer Energie versorgen. Vorzugsweise wird für die erfindungsgemäße elektronische Einheit ein Steuergerät verwendet, das eine derartige Versorgungseinheit bereits aufweist. Beispielsweise werden derartige Steuergeräte bei Diebstahlwarnanlagen verwendet, die Alarm ausgeben, wenn die Batterie abgeklemmt wird. Eine hierfür vorgesehene Versorgungseinheit kann ggf. für die Erfindung verwendet werden.

Vorzugsweise wird auch die Dauer der Verpolung erfaßt und abgespeichert. Weiterhin kann vorzugsweise die tatsächliche Spannung am Anschluß für die negative Bordnetzspannung und/oder die tatsächliche Spannung am Anschluß für die positive Bordnetzspannung und/oder die Differenz zwischen der tatsächlichen Spannung am Anschluß für die negative Bordnetzspannung und der tatsächlichen Spannung am Anschluß für die positive Bordnetzspannung zum Zeitpunkt des Verpolungsbeginns oder über die gesamte Zeitdauer der Verpolung erfaßt und abgespeichert werden.

Durch die Erfindung kann eine Verpolungserkennung beispielsweise per Diagnosegerät in der Werkstatt routinemäßig abgefragt werden. Dabei werden auch die Sicherheit und die Verfügbarkeit der Fahrzeuge durch frühzeitiges Erkennen von Vorschäden durch Verpolung erhöht.

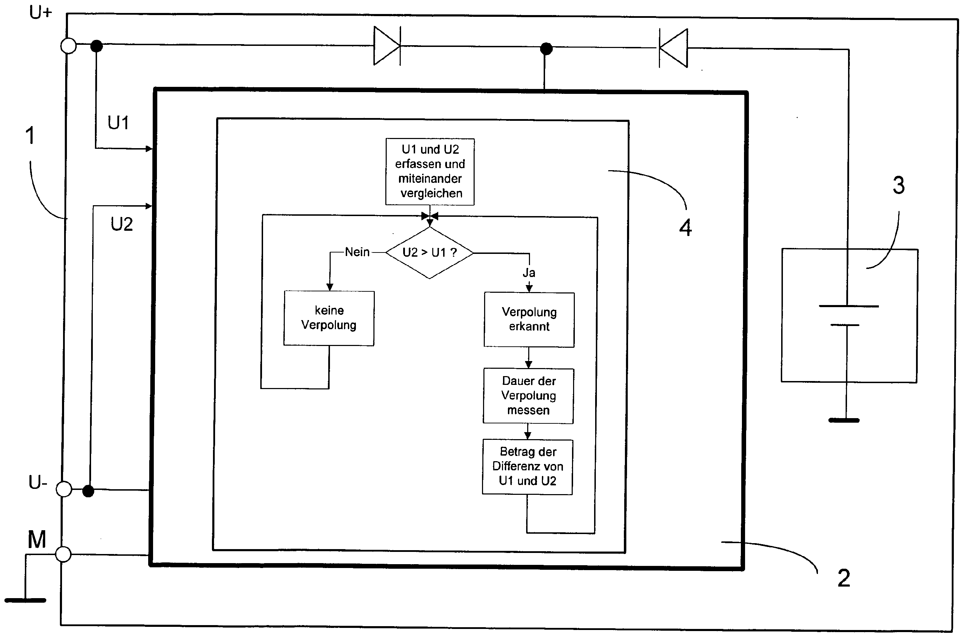

In der Zeichnung ist ein Ausführungsbeispiel der Erfindung dargestellt. Sie zeigt schematisch eine erfindungsgemäße elektronische Einheit.

In der Zeichnung ist eine elektronische Einheit 1 für Kraftfahrzeuge dargestellt, die einen Anschluß U- für die negative Bordnetzspannung und einen Anschluß U+ für die positive Bordnetzspannung. Die Einheit (1) umfaßt weiterhin eine interne elektrische Versorgungseinheit 3 und einen Funktionsblock 4. Die Versorgungseinheit 3 ist beispielsweise ein Akku, der im Verpolungsfall allein die elektrische Versorgung der Einheit 1 liefert. Der Funktionsblock 4 ist Teil einer Elektronik 2, die noch weitere Funktionen auslöst, wie z. B. den Alarm bei einem Abklemmen der Fahrzeugbatterie bei verriegeltem Fahrzeug. Die Elektronik 2 erhält als Eingangssignale die tatsächliche Spannung U2 am Anschluß U- für die negative Bordnetzspannung und die tatsächliche Spannung U1 am Anschluß U+ für die positive Bordnetzspannung. Die Elektronik 2 ist weiterhin mit einer von der negativen Bordnetzspannung entkoppelten Masse M verbunden. Die Spannungen U1 und U2 werden im Funktionsblock 4 miteinander verglichen. Verpolung der Bordnetzspannung wird erkannt sowie ein Abspeichern der Verpolungserkennung wird veranlaßt, wenn die tatsächliche Spannung U2 am Anschluß U- für die negative Bordnetzspannung größer als die tatsächliche Spannung U1 am Anschluß U+ für die positive Bordnetzspannung ist. Die Spannungen U1 und U2 müssen hierbei nicht gegenüber der von der negativen Bordnetzspannung entkoppelten Masse M gemessen werden.

Wird in einer ersten Alternative (hier nicht dargestellt) im Funktionsblock 4 die Spannung U2 mit einem vorgegebenen oberen Grenzwert verglichen oder wird in einer zweiten Alternative (hier nicht dargestellt) im Funktionsblock 4 die Spannung U1 mit einem vorgegebenen unteren Grenzwert verglichen, werden die Spannungen U1 und U2 vorzugsweise gegenüber der von der negativen Bordnetzspannung entkoppelten Masse M gemessen. Verpolung wird erkannt und die Verpolungserkennung wird abgespeichert, wenn die Spannung U2 größer als der obere Grenzwert ist oder wenn die Spannung U1 kleiner als der untere Grenzwert ist.

Weiterhin werden die Dauer der Verpolung sowie die Differenz zwischen der tatsächlichen Spannung U2 am Anschluß U- für die negative Bordnetzspannung und der tatsächlichen Spannung U1 am Anschluß U+ für die positive Bordnetzspannung erfaßt und abgespeichert.

Zum Abspeichern aller verpolungs-bezogenen Daten kann in der Elektronik 2 ein Fehlerspeicher verwendet werden, der mit üblichen Diagnosegeräten in der Werkstatt ausgelesen werden kann.

## Patentansprüche

1. Elektronische Einheit für Kraftfahrzeuge, die einen Anschluss für die negative Bordnetzspannung, einen Anschluss für die positive Bordnetzspannung und einen Funktionsblock (4) umfasst, der Mittel aufweist, durch die die tatsächliche Spannung (U2) am Anschluss (U-) für die negative Bordnetzspannung mit der tatsächlichen Spannung (U1) am Anschluss (U+) für die positive Bordnetzspannung verglichen und durch die die Verpolung der Bordnetzspannung erkannt sowie ein Abspeichern der Verpolungserkennung veranlasst wird, wenn die tatsächliche Spannung (U2) am Anschluss (U-) für die negative Bordnetzspannung größer als die tatsächliche Spannung (U1) am Anschluss (U+) für die positive Bordnetzspannung ist, **gekennzeichnet durch** eine interne elektrische Versorgungseinheit (3), die unabhängig von der Polung der Bordnetzspannung bzw. unabhängig von der Bordnetzspannung zum Einsatz kommt und dass durch die Mittel des Funktionsblocks (4) die Dauer der Verpolung erfasst sowie ein Abspeichern der Verpolungsdauer veranlasst wird.

2. Elektronische Einheit für Kraftfahrzeuge, die einen Anschluss für die negative Bordnetzspannung und einen Anschluss für die positive Bordnetzspannung aufweist, **dadurch gekennzeichnet, dass** die Einheit (1) eine interne elektrische Versorgungseinheit (3) aufweist, die unabhängig von der Polung der Bordnetzspannung bzw. unabhängig von der Bordnetzspannung zum Einsatz kommen kann und dass die Einheit einen Funktionsblock (4) umfasst, der Mittel aufweist, durch die die tatsächliche Spannung (U2) am Anschluss (U-) für die negative Bordnetzspannung erfasst wird, mit einem vorgegebenen oberen Grenzwert verglichen wird und Verpolung der Bordnetzspannung erkannt wird sowie ein Abspeichern der Verpolungserkennung veranlasst wird, wenn die tatsächliche Spannung (U2) am Anschluss (U-) für die negative Bordnetzspannung grösser als der vorgegebene obere Grenzwert ist.

3. Elektronische Einheit für Kraftfahrzeuge, die einen Anschluss für die negative Bordnetzspannung und einen Anschluss für die positive Bordnetzspannung aufweist, **dadurch gekennzeichnet, dass** die Einheit (1) eine interne elektrische Versorgungseinheit (3) aufweist, die unabhängig von der Polung der Bordnetzspannung bzw. unabhängig von der Bordnetzspannung zum Einsatz kommen kann und dass die Einheit einen Funktionsblock (4) umfasst, der Mittel aufweist, durch die die tatsächliche Spannung (U1) am Anschluss (U+) für die positive Bordnetzspannung erfasst wird, mit einem vorgegebenen unteren Grenzwert verglichen wird und Verpolung der Bordnetzspannung erkannt wird sowie ein Abspeichern der Verpolungserkennung veranlasst wird, wenn die tatsächliche Spannung (U1) am Anschluss (U+) für die positive Bordnetzspannung kleiner als der vorgegebene untere Grenzwert ist.

4. Elektronische Einheit nach Patentanspruch 1, **dadurch gekennzeichnet, dass** der Funktionsblock (4) Mittel aufweist, durch die ein Abspeichern der tatsächlichen Spannung (U2) am Anschluss (U-) für die negative Bordnetzspannung und der tatsächlichen Spannung (U1) am Anschluss (U+) für die positive Bordnetzspannung und/oder ein Abspeichern der Differenz zwischen der tatsächlichen Spannung (U2) am Anschluss (U-) für die negative Bordnetzspannung und der tatsächlichen Spannung (U1) am Anschluss (U+) für die positive Bordnetzspannung veranlasst wird.

5. Verfahren zur Erkennung einer Verpolung der Bordnetzspannung in Kraftfahrzeugen mittels einer elektronischen Einheit nach einem der Patentansprüche 1 bis 4.

## Claims

1. An electronic device for motor vehicles which comprises a connection for the negative vehicle power network voltage, a connection to the positive vehicle power network voltage, and a functional block (4), which has means by which the actual voltage (U2) at the connection (U-) for the negative vehicle power network voltage is compared with the actual voltage (U1) at the connection(U+) for the positive vehicle power network voltage and by which a reverse polarity of the vehicle power network voltage is sensed and storage of data regarding the sensing of a reverse polarity is initiated if the actual voltage (U2) at the connection (U-) for the negative vehicle power network voltage is greater than the actual voltage (U1) at the connection (U+) for the positive vehicle power network voltage, **characterised by** an internal electrical supply unit (3), which is used independently of the polarity of the vehicle power network voltage or independently of the vehicle power network voltage itself and which, by the means of the functional block (4), senses the duration of the reverse polarity and initiates storage of data regarding the duration of the reverse polarity.

2. An electronic device for motor vehicles which has a connection for the negative vehicle power network voltage and a connection for the positive vehicle power network voltage, **characterised in that** the device (1) has an internal electrical supply unit (3), which can be used independently of the polarity of the vehicle power network voltage or independently of the vehicle power network voltage itself, and **in that** the device comprises a functional block (4), which has means by which the actual voltage (U2) at the connection (U-) for the negative vehicle power network voltage is sensed, is compared with a predefined upper limit value, and a reverse polarity of the vehicle power network voltage is sensed and storage of data regarding the sensing of a reverse polarity is initiated if the actual voltage (U2) at the connection (U-) for the negative vehicle power network voltage is greater than the predefined upper limit value.

3. An electronic device for motor vehicles which has a connection for the negative vehicle power network voltage and a connection for the positive vehicle power network voltage, **characterised in that** the device (1) has an internal electrical supply unit (3), which can be used independently of the polarity of the vehicle power network voltage or independently of the vehicle power network voltage itself, and **in that** the device comprises a functional block (4), which has means by which the actual voltage (U1) at the connection (U+) for the positive vehicle power network voltage is sensed, is compared with a predefined lower limit value, and a reverse polarity of the vehicle power network voltage is sensed and storage of data regarding the sensing of a reverse polarity is initiated if the actual voltage (U1) at the connection (U+) for the positive vehicle power network voltage is lower than the predefined lower limit value.

4. An electronic device according to claim 1, **characterised in that** the functional block (4) has means by which storage of the actual voltage (U2) at the connection (U-) for the negative vehicle power network voltage and of the actual voltage (U1) at the connection (U+) for the positive vehicle power network voltage and/or storage of the difference between the actual voltage (U2) at the connection (U-) for the negative vehicle power network voltage and the actual voltage (U1) at the connection (U+) for the positive vehicle power network voltage.

5. A method for sensing a reverse polarity of the vehicle power network voltage in motor vehicles by means of an electronic device according to any one of claims 1 to 4.

## Revendications

1. Unité électronique destinée à des véhicules comprenant une borne pour la tension du réseau embarqué négative une borne pour la tension du réseau embarqué positive et un bloc fonctionnel (4), qui comporte des moyens permettant de comparer la tension réelle (U2) au niveau de la borne (U-) pour la tension du réseau embarqué négative avec la tension réelle (U1) au niveau de la borne (U+) pour la tension du réseau embarqué positive, et de reconnaître une inversion de polarité de la tension du réseau embarqué ainsi que d'enregistrer l'identification de l'inversion de polarité, lorsque la tension réelle (U2) au niveau de la borne (U-) pour la tension du réseau embarqué négative est supérieure à la tension réelle (U1) au niveau de la borne (U+) pour la tension du réseau embarqué positive,
**caractérisée par**
une unité d'alimentation électrique interne (3) qui est mise en oeuvre indépendamment de la polarité de la tension du réseau embarqué ou indépendamment de la tension du réseau embarqué, et les moyens du bloc fonctionnel (4) permettant de détecter la durée de l'inversion de polarité et d'enregistrer cette durée de l'inversion de polarité est effectué.

2. Unité électronique destinée à des véhicules comportant une borne pour la tension du réseau embarqué négative et une borne pour la tension du réseau embarqué positive,
**caractérisée en ce que**
l'unité (1) comporte une unité d'alimentation électrique interne (3) qui peut être mise en oeuvre indépendamment de la polarité de la tension du réseau embarqué ou indépendamment de la tension du réseau embarqué, ainsi qu'un bloc fonctionnel (4) comprenant des moyens permettant de détecter la tension réelle (U2) au niveau de la borne (U-) pour la tension du réseau embarqué négative, de la comparer à une valeur limite supérieure prédéfinie et de reconnaître une inversion de polarité de la tension du réseau embarqué et d'enregistrer l'identification de cette inversion de polarité lorsque la tension réelle (U2) au niveau de la borne (U-) pour la tension du réseau embarqué négative est supérieure à la valeur limite supérieure prédéfinie.

3. Unité électronique destinée à des véhicules qui comportent une borne pour la tension du réseau embarqué négative et une borne pour la tension du réseau embarqué positive,
**caractérisée en ce que**
l'unité (1) comporte une unité d'alimentation électrique interne (3) qui peut être mise en oeuvre indépendamment de la polarité de la tension du réseau embarqué ou indépendamment de la tension du réseau embarqué, ainsi qu'un bloc fonctionnel (4) comprenant des moyens permettant de détecter la tension réelle (U1) au niveau de la borne (U+) pour la tension du réseau embarqué positive, de la comparer à une valeur limite inférieure prédéfinie et de reconnaître une inversion de la polarité de la tension du réseau embarqué, et d'enregistrer l'identification de cette inversion de la polarité lorsque la tension réelle (U1) au niveau de la borne (U+) pour la tension du réseau embarqué positive est inférieure à la valeur de seuil inférieure prédéfinie.

4. Unité électronique conforme à la revendication 1,
**caractérisée en ce que**
le bloc fonctionnel (4) comporte des moyens permettant d'enregistrer la tension réelle (U2) au niveau de la borne (U-) pour la tension du réseau embarqué négative, et la tension réelle (U1) au niveau de la borne (U+) pour la tension du réseau embarqué positive, et/ou d'enregistrer la différence entre la tension réelle (U2) au niveau de la borne (U-) pour la tension du réseau embarqué négative et la tension réelle (U1) au niveau de la borne (U+) pour la tension du réseau embarqué positive.

5. Procédé permettant de reconnaître une inversion de polarité de la tension du réseau embarqué dans des véhicules au moyen d'une unité électronique conforme à l'une des revendications 1 à 4.
